# EUROPEAN PATENT APPLICATION

(11) **EP 4 683 101 A1**
(43) Date of publication of application: **21.01.2026**
(21) Application number: 23942182.9
(22) Date of filing: 14.12.2023
(51) Int. Cl.: H01M 50/536, H01M 50/474

(54) **CONNECTING MEMBER, BATTERY CELL, BATTERY, AND ELECTRIC DEVICE**

(30) Priority: 20.06.2023 CN 202310732611
(71) Applicant: Contemporary Amperex Technology Co., Limited, Ningde, Fujian 352100 (CN)
(72) Inventor: CHENG, Xing, Ningde, Fujian 352100 (CN); SU, Huasheng, Ningde, Fujian 352100 (CN); JIN, Yikuang, Ningde, Fujian 352100 (CN); WU, Yongbin, Ningde, Fujian 352100 (CN); NIU, Shaojun, Ningde, Fujian 352100 (CN)
(74) Representative: Kraus & Lederer PartGmbB
(86) International application number: PCT/CN2023/138677
(87) International publication number: WO 2024/259916

(57) **Abstract**

Embodiments of this application provide a connecting member, a battery cell, a battery, and an electric apparatus. The connecting member is for use in a battery cell. The connecting member includes a connecting portion and a bending portion. The connecting portion is connected to the bending portion. The connecting portion has a reinforcing structure, and the reinforcing structure is configured to make a bending strength of the connecting portion greater than a bending strength of the bending portion. In the connecting member provided in the embodiments of this application, the bending strength of the connecting portion of the connecting member is greater than the bending strength of the bending portion of the connecting member. Therefore, it is easier for the bending portion to bend compared to the connecting portion, so that deflection of a bending axis of the bending portion is reduced in a bending process, thereby allowing the connecting member to be smoothly installed into a housing of the battery cell and enhancing structural stability of the connecting member.

## Description

### CROSS-REFERENCE TO RELATED APPLICATIONS

This application claims priority to Chinese Patent Application No. 202310732611.4, filed on June 20, 2023 and entitled "CONNECTING MEMBER, BATTERY CELL, BATTERY, AND ELECTRIC APPARATUS", which is incorporated herein by reference in its entirety.

### TECHNICAL FIELD

Embodiments of this application relate to the field of battery technology, and in particular to a connecting member, a battery cell, a battery, and an electric apparatus.

### BACKGROUND

Due to advantages such as high energy density, high power density, a high cycle count, and a long storage life, rechargeable batteries have been widely used in electric vehicles, mobile devices, and various electric tools.

Currently, for a battery, in a process of using a connecting member to connect a tab and an electrode terminal of the battery, it is usually necessary to bend the connecting member, thereby imposing certain limitations on thickness and hardness of the connecting member. In a bending process of the connecting member, an issue of crease deflection is prone to occur, making it difficult to install an electrode assembly into a battery shell. Forcible installation may damage the connecting member, the tab, and the electrode terminal, thereby affecting use performance of the battery.

### SUMMARY

Embodiments of this application provide a connecting member, a battery cell, a battery, and an electric apparatus, reducing deflection of a bending axis of a bending portion of a connecting member in a bending process, thereby improving a service life of the battery.

A first aspect provides a connecting member for use in the battery cell, including a connecting portion and a bending portion. The connecting portion is connected to the bending portion. The connecting portion has a reinforcing structure, and the reinforcing structure is configured to make a bending strength of the connecting portion greater than a bending strength of the bending portion.

In the embodiments of this application, the connecting member includes a connecting portion and a bending portion. The connecting portion is connected to the bending portion, and the connecting portion has a reinforcing structure, so that the bending strength of the connecting portion is greater than the bending strength of the bending portion. Therefore, it is easier for the bending portion to bend compared to the connecting portion, so that deflection of a bending axis of the bending portion is reduced in a bending process, thereby allowing the connecting member to be smoothly installed into a housing of the battery cell, enhancing structural stability of the connecting member, and improving the service life of the battery.

In some implementations, the connecting portion includes at least one layer of a first structure stacked along a first direction, and the first structure includes the reinforcing structure. Therefore, in the embodiments of this application, the connecting portion includes at least one layer of the first structure stacked along the first direction, and the reinforcing structure is included in the at least one layer of the first structure, so that the bending strength of the connecting portion can be improved, thereby reducing the deflection of the bending axis of the bending portion in the bending process, thereby allowing the connecting member to be smoothly installed into the housing of the battery cell, improving the structural stability of the connecting member, and improving the service life of the battery.

In some implementations, a surface of the first structure perpendicular to the first direction is provided with a protruding structure, and the reinforcing structure includes the protruding structure. Therefore, in the embodiments of this application, the surface of the first structure perpendicular to the first direction is provided with the protruding structure, for example, the protruding structure may be formed by local pressing, reducing a distance between adjacent first structures, so that the bending strength of the connecting portion can be improved. Additionally, compared to a case in which the protruding structure is not provided, it is difficult for the connecting portion to bend in a region in which the protruding structure is provided, so that the deflection of the bending axis of the bending portion can be reduced in the bending process, thereby allowing the connecting member to be smoothly installed into the housing of the battery cell, improving the structural stability of the connecting member, and improving the service life of the battery.

In some implementations, the connecting portion includes a plurality of layers of the first structures, and protruding structures of the plurality of layers of the first structures protrude in a same direction. Therefore, in the embodiments of this application, the protruding structures of the plurality of layers of the first structures protrude in the same direction, for example, the plurality of layers of the first structures are pressed in the same direction by using a pressing process, the bending strength of the connecting portion can be further improved, so that the deflection of the bending axis of the bending portion can be reduced in the bending process, thereby allowing the connecting member to be smoothly installed into the housing of the battery cell, improving the structural stability of the connecting member, and improving the service life of the battery.

In some implementations, positions of the protruding structures of the plurality of layers of the first structures overlap with each other. Therefore, in the embodiments of this application, the positions of the protruding structures of the plurality of layers of the first structures overlap with each other, for example, a same region of at least two adjacent layers of the first structures in the plurality of layers of the first structures are pressed in the same direction by using a pressing process, so that the bending strength of the connecting portion can be further improved, thereby reducing the deflection of the bending axis of the bending portion in the bending process.

In some implementations, the at least two adjacent layers of the first structures in the plurality of layers of the first structures are connected to each other, and the reinforcing structure includes the at least two layers of the first structures connected to each other. Therefore, in the embodiments of this application, the at least two adjacent layers of the first structures in the plurality of layers of the first structures are connected to each other, for example, the plurality of layers of the first structures are closely connected by using techniques such as welding or bonding, so that the bending strength of the connecting portion can be improved, thereby reducing the deflection of the bending axis of the bending portion in the bending process.

In some implementations, the connecting portion includes at least one layer of the first structure stacked along the first direction, and at least one side of the first structure perpendicular to the first direction is provided with the reinforcing structure. Therefore, in the embodiments of this application, the reinforcing structure is provided on at least one side of the first structure perpendicular to the first direction, so that the bending strength of the first structure can be improved, thereby improving the bending strength of the connecting portion and reducing the deflection of the bending axis of the bending portion in the bending process.

In some implementations, two sides of the first structure perpendicular to the first direction are each provided with the reinforcing structure. In this way, the bending strength of the first structure can be further improved, thereby improving the bending strength of the connecting portion and reducing the deflection of the bending axis of the bending portion in the bending process.

In some implementations, the two sides of the first structure perpendicular to the first direction are provided with a same reinforcing structure, and the same reinforcing structure wraps around the first structure. Therefore, in the embodiments of this application, the same reinforcing structure is provided on the two sides of the first structure perpendicular to the first direction, and the same reinforcing structure wraps around the first structure, so that the bending strength of the connecting portion can be significantly improved, reducing the deflection of the bending axis of the bending portion in the bending process.

In some implementations, a material of the reinforcing structure includes at least one of the following: polypropylene PP, polyethylene terephthalate PET, polyethylene PE, polyvinyl chloride PVC, polytetrafluoroethylene PTFE, ethylene-vinyl acetate copolymer EVA, and rubber.

In some implementations, the connecting portion includes at least one layer of the first structure stacked along the first direction, the bending portion includes at least one layer of a second structure stacked along the first direction, and the number of layers of the first structures included in the connecting portion is equal to the number of layers of the second structures included in the bending portion, thereby helping manufacture the connecting member and improve processing efficiency of the battery.

In some implementations, the connecting member further includes a tab connection end and an electrode terminal connection end, and the tab connection end is connected to the connecting portion and the electrode terminal connection end is connected to the connecting portion respectively through the bending portion.

In some implementations, the tab connection end and the electrode terminal connection end are disposed at two ends of the connecting portion in a second direction. Therefore, in the embodiments of this application, the tab connection end and the electrode terminal connection end are disposed at the two ends of the connecting portion along the second direction, so that a certain distance is maintained between the tab connection end and the electrode terminal connection end, thereby reducing mutual interference between an electrode terminal and an electrode assembly.

In some implementations, a bending direction of the bending portion between the tab connection end and the connecting portion is opposite to a bending direction of the bending portion between the electrode terminal connection end and the connecting portion. Therefore, in the embodiments of this application, the bending direction of the bending portion between the tab connection end and the connecting portion is set opposite the bending direction of the bending portion between the electrode terminal connection end and the connecting portion, so that a space occupied by the bent connecting member in the battery is reduced, thereby saving space inside the battery.

A second aspect provides a battery cell, including the connecting member according to any one of the foregoing embodiments.

A third aspect provides a battery, including the battery cell according to the second aspect or any implementation thereof.

A fourth aspect provides an electric apparatus, including the battery according to the third aspect or any implementation thereof, and the battery is configured to provide electrical energy to the electric apparatus.

In some implementations, the electric apparatus may be a vehicle, a ship, or a spacecraft.

### BRIEF DESCRIPTION OF DRAWINGS

To describe the technical solutions in embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle provided in an embodiment of this application.
FIG. 2 is a schematic structural diagram of a battery provided in an embodiment of this application.
FIG. 3 is a schematic structural diagram of a battery cell provided in an embodiment of this application.
FIG. 4 is an exploded view of an end cover assembly provided in an embodiment of this application.
FIG. 5 is a schematic structural diagram of a connecting member provided in an embodiment of this application.
FIG. 6 is a schematic structural diagram of another connecting member provided in an embodiment of this application.
FIG. 7 is a schematic cross-sectional view of a partial structure of a connecting member provided in an embodiment of this application.
FIG. 8 is a schematic cross-sectional view of a partial structure of another connecting member provided in an embodiment of this application.
FIG. 9 is a schematic cross-sectional view of a partial structure of another connecting member provided in an embodiment of this application.
FIG. 10 is a schematic cross-sectional view of a partial structure of another connecting member provided in an embodiment of this application.
FIG. 11 is a schematic cross-sectional view of a partial structure of another connecting member provided in an embodiment of this application.
FIG. 12 is a schematic cross-sectional view of a partial structure of another connecting member provided in an embodiment of this application.
FIG. 13 is a schematic cross-sectional view of a partial structure of another connecting member provided in an embodiment of this application.
FIG. 14 is a schematic cross-sectional view of a partial structure of another connecting member provided in an embodiment of this application.
FIG. 15 is a schematic cross-sectional view of a partial structure of another connecting member provided in an embodiment of this application.
FIG. 16 is a schematic structural diagram of another connecting member provided in an embodiment of this application.
FIG. 17 is a schematic structural diagram of another connecting member provided in an embodiment of this application.
FIG. 18 is a schematic structural diagram of another connecting member provided in an embodiment of this application.

Description of reference signs: 1. electric apparatus; 10. battery; 20. battery cell; 30. controller; 40. motor; 11. box body; 111. first box body portion; 112. second box body portion; 210. housing; 220. electrode assembly; 230. end cover assembly; 2301. negative electrode end cover assembly; 2302. positive electrode end cover assembly; 231. riveting block; 232. second insulating member; 233. end cover; 234. first insulating member; 235. sealing ring; 236. connecting member; 237. electrode terminal; 2361. electrode terminal connection end; 2362. tab connection end; 2363. connecting portion; 2364. bending portion; 2365. bending axis; 51. first structure; 52. second structure; 53. first gap; 54. second gap; 55. welded portion; 56. third gap; 57. bonded portion; 2366. third structure; 2367. fourth structure; 2368. fifth structure; 60. reinforcing structure; 61. protruding structure; 62. first reinforcing structure; and 63. second reinforcing structure.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of the embodiments of this application.

Unless otherwise defined, all technical and scientific terms used in the embodiments of this application shall have the same meanings as commonly understood by those skilled in the art to which the embodiments of this application relate. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described in this application may combine with another embodiment.

In the description of the embodiments of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in the embodiments of this application as appropriate to specific situations.

The term "and/or" in the embodiments of this application is only an associative relationship for describing associated objects, indicating that three relationships may be present. For example, A and/or B may indicate three cases: presence of only A; presence of both A and B; and presence of only B. In addition, the character "/" in the embodiments of this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, dimensions such as thickness, length, and width of various components and dimensions such as overall thickness, length, and width of integrated devices in the embodiments of this application are merely for illustrative purposes and should not constitute any limitations on the embodiments of this application.

The battery typically is a single physical module that includes one or more battery cells for providing a higher voltage and capacity. For example, the battery may include a battery module, a battery pack, or the like. Typically, a battery further includes a box body configured to enclose one or more battery cells. The box body can prevent liquids or other foreign matter from affecting charging or discharging of the battery cell.

In some embodiments, the battery cell may include a lithium-ion battery, a lithium-sulfur battery, a sodium-lithium-ion battery, a sodium-ion battery, a magnesium-ion battery, or the like. This is not limited in the embodiments of this application. Typically, a battery cell may also be referred to as a cell. The battery cell may be cylindrical, flat, cuboid, or of other regular or irregular shapes. The technical solutions of the embodiments of this application can be applied to battery cells of any shape, especially cylindrical battery cells.

The battery cell includes an electrode assembly and an electrolyte. The electrode assembly includes a positive electrode plate, a negative electrode plate, and a separator. The battery cell operates relying on the migration of metal ions between the positive electrode plate and negative electrode plate. The positive electrode plate includes a positive electrode current collector and a positive electrode active substance layer. The positive electrode active substance layer is applied on a surface of the positive electrode current collector. A current collector uncoated with the positive electrode active substance layer bulges out of a current collector coated with the positive electrode active substance layer, and the current collector uncoated with the positive electrode active substance layer is used as a positive tab. Using the lithium-ion battery as an example, a material of the positive electrode current collector may be aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. A current collector uncoated with the negative electrode active substance layer bulges out of a current collector coated with the negative electrode active substance layer, and the current collector uncoated with the negative electrode active substance layer is used as a negative tab. A material of the negative electrode current collector may be copper, and the negative electrode active substance can be carbon, silicon, or the like. To ensure that a high current can pass without fusing, the positive tab is provided in plurality, and the plurality of positive tabs are stacked together; and the negative tab is provided in plurality, and the plurality of negative tabs are stacked together. A material of the separator may be polypropylene (polypropylene, PP), polyethylene (polyethylene, PE), or the like. In addition, the electrode assembly may have a winding structure or a laminated structure. This embodiment of this application is not limited thereto.

Currently, in an installation process of a battery, a connecting member is typically used to connect a tab and an electrode terminal of the battery. The connecting member typically needs to be bent during use, and to help bending the connecting member, the bending portion cannot be made too thick. In addition, to ensure a current-flowing area of the connecting member, the bending portion cannot be set too thin. Therefore, the connecting member is typically configured as a multi-layer thin-sheet structure. When the bending strength of the connecting member is low, an issue of crease deflection is prone to occur in a bending process of the connecting member, making it difficult to install an electrode assembly into a battery shell. Forcible installation may damage the connecting member, the tab, and the electrode terminal, thereby affecting service life thereof and, consequently, use performance of the battery.

In view of this, the embodiments of this application provide a connecting member for use in a battery cell, including a connecting portion and a bending portion. The connecting portion is connected to the bending portion. The connecting portion has a reinforcing structure, and the reinforcing structure is configured to make a bending strength of the connecting portion greater than a bending strength of the bending portion. Therefore, it is easier for the bending portion to bend compared to the connecting portion, so that deflection of a bending axis of the bending portion is reduced in a bending process, thereby allowing the connecting member to be smoothly installed into a housing of the battery cell and enhancing structural stability of the connecting member.

The technical solutions described in the embodiments of this application are applicable to various electric apparatuses using batteries.

It should be understood that the electric apparatus in the embodiments of this application includes, but is not limited to, a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, the electric apparatus being a vehicle is used as an example for description of the following embodiments.

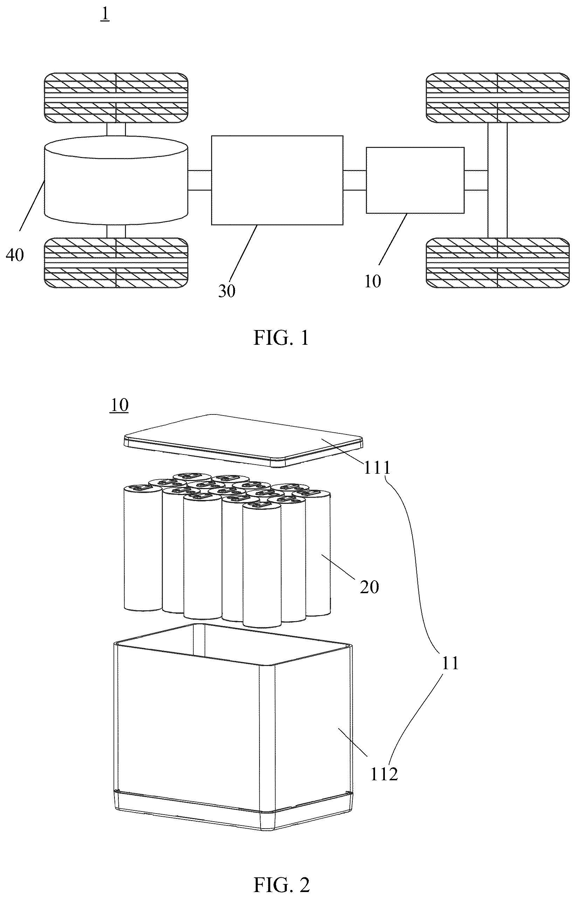

For example, FIG. 1 is a schematic structural diagram of a vehicle 1 according to an embodiment of this application. The vehicle 1 may be a fossil fuel vehicle, a natural-gas vehicle, or a new energy vehicle, and the new energy vehicle may be a battery electric vehicle, a hybrid electric vehicle, a range-extended vehicle, or the like. A motor 40, a controller 30, and a battery 10 may be provided inside the vehicle 1, and the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 may be used not only as the operational power supply for the vehicle 1, but also as a driving power supply for the vehicle 1, replacing or partially replacing fossil fuel or natural gas to provide driving traction for the vehicle 1.

For example, FIG. 2 is a schematic structural diagram of a battery 10 according to an embodiment of this application. The battery 10 may include a plurality of battery cells 20. In addition to the battery cells 20, the battery 10 may further include a box body 11, the box body 11 has a hollow structure inside, and the plurality of battery cells 20 may be accommodated in the box body 11. As shown in FIG. 2, the box body 11 may include two parts, which are referred to herein as a first box body portion 111 and a second box body portion 112, and the first box body portion 111 and the second box body portion 112 are snap-fitted together. Shapes of the first box body portion 111 and the second box body portion 112 may be determined based on a shape in which the plurality of battery cells 20 are combined, and at least one of the first box body portion 111 and the second box body portion 112 has an opening. For example, as shown in FIG. 2, only one of the first box body portion 111 and the second box body portion 112 is a hollow cuboid having an opening, while the other is plate-shaped to cover the opening. Using the second box body portion 112 being a hollow cuboid with only one face as an opening and the first box body portion 111 being plate-shaped as an example, the first box body portion 111 covers the opening of the second box body portion 112 to form a box body 11 having a closed chamber, and the chamber can accommodate the plurality of battery cells 20. After being connected in parallel, series, or series and parallel, the plurality of battery cells 20 are placed in the box body 11 that is formed after the first box body portion 111 and the second box body portion 112 are snap-fitted together.

For another example, unlike what is shown in FIG. 2, both the first box body portion 111 and the second box body portion 112 may be hollow cuboids, each with only one face as an opening, and the opening of the first box body portion 111 and the opening of the second box body portion 112 are disposed opposite each other. In addition, the first box body portion 111 and the second box body portion 112 are snap-fitted together to form the box body having the closed chamber. After being connected in parallel, series, or series and parallel, the plurality of battery cells 20 are placed in the box body 11 that is formed after the first box body portion 111 and the second box body portion 112 are snap-fitted together.

In some implementations, the battery 10 may further include other structures. Details are not described herein again. For example, the battery 10 may further include a busbar component (not shown in the figure). The busbar component is configured to implement an electrical connection between the plurality of battery cells 20, such as in parallel, series, or in series and parallel. Specifically, the busbar component may implement an electrical connection between the battery cells 20 by connecting electrode terminals of the battery cells 20. In some embodiments, the busbar component may be fixed to the electrode terminals of the battery cells 20 by welding. Electrical energy of the plurality of battery cells 20 may be further drawn out through a conductive mechanism passing through the box body. In some embodiments, the conductive mechanism may also belong to the busbar component.

To meet different power usage requirements, the number of battery cells 20 may be in plurality, and the plurality of battery cells 20 may be connected in series, parallel, or series and parallel, and being connected in series and parallel means a combination of series and parallel connections. The battery 10 may also be referred to as a battery pack. In some embodiments, the plurality of battery cells 20 may first be connected in series, parallel, or series and parallel to form a battery module, and then a plurality of battery modules may be connected in series, parallel, or series and parallel to form the battery 10. In other words, the plurality of battery cells 20 may directly form the battery 10, or may first form the battery modules, which then form the battery 10.

For convenience of explanation, technical solutions of the embodiments of this application are described below using the cylindrical battery cell 20 shown in FIG. 2 as an example. However, it should be understood that the battery cell 20 in the embodiments of this application may be cylindrical battery cells, and may further include, without limitation, prismatic battery cells or blade-type battery cells.

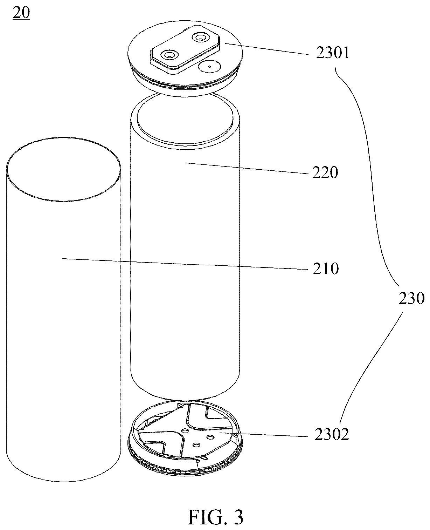

FIG. 3 is a schematic structural diagram of a battery cell 20 according to an embodiment of this application. As shown in FIG. 3, the battery cell 20 includes a housing 210, an electrode assembly 220, and an end cover assembly 230. The housing 210 and the end cover assembly 230 form a shell or a battery case. The housing 210 is made of metal, such as aluminum. A shape of the housing 210 is determined based on a combined shape of one or more electrode assemblies 220. For example, a shape of the housing 210 may be a hollow cylinder as shown in FIG. 3.

As shown in FIG. 3, the housing 210 has an opening, the electrode assembly 220 is accommodated in the housing 210, and the end cover assembly 230 is configured to cover the opening to constrain the electrode assembly 220 within the housing 210. The housing 210 and the end cover assembly 230 implement accommodation and protection of the electrode assembly 220 and other components. The housing 210 is filled with an electrolyte, such as an electrolytic solution. The end cover assembly 230 includes a negative electrode end cover assembly 2301 and a positive electrode end cover assembly 2302, and the negative electrode end cover assembly 2301 and the positive electrode end cover assembly 2302 respectively cover the openings of the housing 210 at two ends of the housing 210 to cover the electrode assembly 220 in the housing 210. The negative electrode end cover assembly 2301 is configured to provide a negative electrode terminal, and the positive electrode end cover assembly 2302 is configured to provide a positive electrode terminal. The positive electrode terminal is connected to a positive tab of the electrode assembly 220, and the negative electrode terminal is connected to a negative tab of the electrode assembly 220. The positive electrode terminal and the negative electrode terminal may be provided in any quantity. For example, the battery cell 20 may have two positive electrode terminals and two negative electrode terminals, with the two positive electrode terminals provided on the positive electrode end cover assembly 2302 and the two negative electrode terminals provided on the negative electrode end cover assembly 2301. The positive electrode end cover assembly 2302 and the negative electrode end cover assembly 2301 have the same structure. In the following description, the end cover assembly 230 in the embodiments of this application may be either the positive electrode end cover assembly 2302 or the negative electrode end cover assembly 2301.

In the battery cell 20, based on actual usage requirements, one or a plurality of the electrode assemblies 220 may be provided. For example, as shown in FIG. 3, one electrode assembly 220 is provided in the battery cell 20.

In some implementations, as shown in FIG. 3, when the battery cell 20 is a cylinder, a diameter of the cylinder may range from 10 mm to 100 mm. For example, the diameter of the battery cell 20 may be 10 mm, 20 mm, 30 mm, 40 mm, 50 mm, 60 mm, 70 mm, 80 mm, 90 mm, 100 mm, or within a range obtained by combining any two of the above values. It should be understood that, in some implementations, the diameter of the cylinder may also range from 30 mm to 60 mm.

In some implementations, as shown in FIG. 3, a length of the battery cell 20 may range from 20 mm to 1000 mm. For example, the length of the battery cell 20 may be 20 mm, 30 mm, 40 mm, 50 mm, 60 mm, 70 mm, 80 mm, 90 mm, 100 mm, 200 mm, 300 mm, 400 mm, 500 mm, 600 mm, 700 mm, 800 mm, 900 mm, 1000 mm, or within a range obtained by combining any two of the above values. In some implementations, the length of the battery cell 20 may also range from 50 mm to 500 mm.

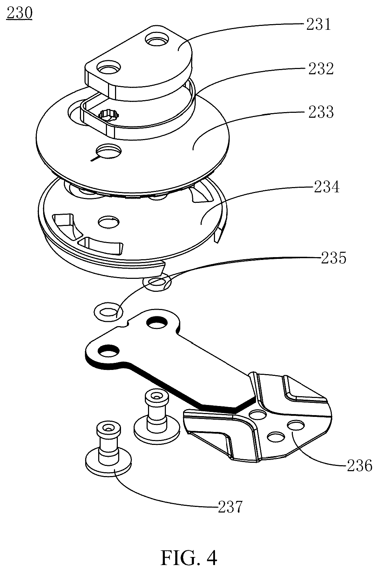

FIG. 4 is an exploded view of an end cover assembly 230 provided in an embodiment of this application. As shown in FIG. 4, the end cover assembly 230 includes an end cover 233, an electrode terminal 237, and a connecting member 236. The electrode terminal 237 is disposed on the end cover 233, and the connecting member 236 is configured to connect the electrode terminal 237 and a tab of the electrode assembly 220 (not shown in the figure).

In some implementations, as shown in FIG. 4, a first insulating member 234 is disposed between the end cover 233 and the electrode terminal 237, and the first insulating member 234, also referred to as lower plastic, is configured to implement insulation isolation between the electrode terminal 237 and the end cover 233.

In some implementations, as shown in FIG. 4, the end cover assembly 230 in the battery cell 20 further includes a riveting block 231, and the riveting block 231 is configured to fix the electrode terminal 237 protruding from the end cover 233.

In some implementations, as shown in FIG. 4, the end cover assembly 230 in the battery cell 20 further includes a second insulating member 232, and the second insulating member 232, also referred to as upper plastic, is configured to implement insulation isolation between the end cover 233 and the riveting block 231.

**In** some implementations, as shown in FIG. 4, the end cover assembly 230 in the battery cell 20 further includes a sealing ring 235, which is configured to form a seal between the electrode terminal 237 and the end cover 233. For example, the sealing ring 235 may be annular and wrap around an outer side of the electrode terminal 237.

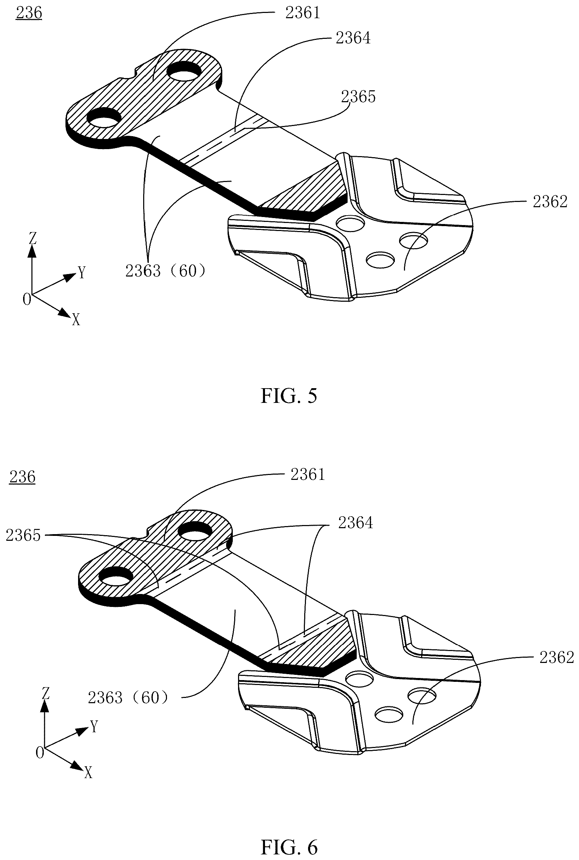

FIG. 5 is a schematic structural diagram of a connecting member 236 provided in an embodiment of this application. FIG. 6 is a schematic structural diagram of another connecting member 236 provided in an embodiment of this application.

It should be understood that, for convenience of description in the embodiments of this application, three directions are defined herein. As shown in FIG. 5 and FIG. 6, a first direction Z may be a thickness direction of the connecting member 236, and the first direction Z is perpendicular to a second direction X and a third direction Y. The second direction X may be a length direction of the connecting member 236, and the second direction X is perpendicular to the first direction Z and the third direction Y. The third direction Y may be a width direction of the connecting member 236, and the third direction Y is perpendicular to the first direction Z and the second direction X.

**In** the embodiments of this application, as shown in FIG. 5 and FIG. 6, the connecting member 236 includes a connecting portion 2363 and a bending portion 2364, and the connecting portion 2363 is connected to the bending portion 2364. The connecting portion 2363 has a reinforcing structure 60, and the reinforcing structure is configured to make a bending strength of the connecting portion 2363 greater than a bending strength of the bending portion 2364.

For example, in some implementations, as shown in FIG. 5, the connecting member 236 includes one bending portion 2364 and two connecting portions 2363. As shown in FIG. 6, the connecting member 236 may include two bending portions 2364 and one connecting portion 2363. It should be understood that, in the embodiments of this application, the number of bending portions 2364 and the number of connecting portions 2363 may be set according to actual needs. For convenience of explanation, the following embodiments of this application are described in detail using the connecting member 236 shown in FIG. 6 as an example.

In the embodiments of this application, the connecting member 236 includes the connecting portion 2363 and the bending portion 2364, and the connecting portion 2363 is connected to the bending portion 2364. The connecting portion 2363 has a reinforcing structure 60, making the bending strength of the connecting portion 2363 greater than the bending strength of the bending portion 2364. Therefore, it is easier for the bending portion 2364 to bend compared to the connecting portion 2363, so that deflection of a bending axis 2365 of the bending portion 2364 is reduced in the bending process, thereby allowing the connecting member 236 to be smoothly installed into a housing 210 of the battery cell 20, enhancing structural stability of the connecting member 236, and improving service life of the battery 10.

It should be understood that, in the embodiments of this application, the connecting portion 2363 of the connecting member 236 may include at least one layer of a first structure 51 stacked along the first direction Z. In some implementations, when the connecting portion 2363 is a single-layer structure, that is, the connecting portion 2363 includes one layer of the first structure 51, the first structure 51 may be prepared by an integral molding process. In some other implementations, when the connecting portion 2363 includes a plurality of layers of the first structures 51, the plurality of layers of the first structures 51 may be stacked along the first direction Z. In some other implementations, when the connecting portion 2363 includes the plurality of layers of the first structures 51, the plurality of layers of the first structures 51 may alternatively be fixed by welding or bonding.

It should also be understood that, in the embodiments of this application, the bending portion 2364 of the connecting member 236 may include at least one layer of a second structure 52 stacked along the first direction Z. In some implementations, when the bending portion 2364 is a single-layer structure, that is, the bending portion 2364 includes one layer of the second structure 52, the second structure 52 may be prepared by an integral molding process. In some other implementations, when the bending portion 2364 includes a plurality of layers of the second structures 52, the plurality of layers of the second structures 52 may be stacked along the first direction Z. In some other implementations, when the bending portion 2364 includes the plurality of layers of the second structures 52, without affecting the bending of the bending portion 2364, that is, ensuring that the bending strength of the connecting portion 2363 is greater than the bending strength of the bending portion 2364, local welding or bonding treatment may be performed on the plurality of layers of the second structures 52 to help a fixed connection between the bending portion 2364 and the connecting portion 2363 and appropriately improve the bending strength of the bending portion 2364. For example, local welding treatment may be performed on the plurality of layers of the second structures 52 in the bending portion 2364, that is, welding treatment may be performed on a part of the second structure 52 of the bending portion 2364 close to one or two ends of the connecting portion 2363 along the second direction X, and welding treatment or local welding treatment is not performed on a middle portion along the second direction X, so that the bending portion 2364 maintains a multi-layer structure in the middle portion along the second direction X, and the bending strength of the bending portion 2364 is less than the bending strength of the connecting portion 2363.

It should also be understood that, in the embodiments of this application, the number of layers of the first structures 51 in the connecting portion 2363 and the number of layers of the second structures 52 in the bending portion 2364 may be the same or different.

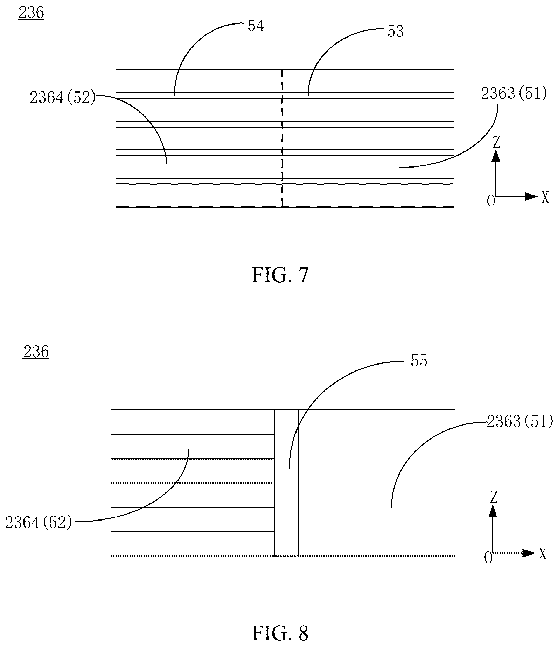

In some implementations, when the number of layers of the connecting portions 2363 and the number of layers of the bending portions 2364 in the embodiments of this application are the same, for example, as shown in FIG. 7, FIG. 7 is a schematic cross-sectional view of a partial structure of a connecting member 236 provided in an embodiment of this application, the connecting member 236 is an integrally formed stacked structure, that is, in the connecting member 236, the first structure 51 of the connecting portion 2363 and the corresponding second structure 52 of the bending portion 2364 are integrally formed structures. The dashed line in FIG. 7 represents a boundary between the connecting portion 2363 and the bending portion 2364 of the connecting member 236. A first gap 53 exists between two adjacent first structures 51 in the connecting portion 2363, a second gap 54 exists between two adjacent second structures 52 in the bending portion 2364, and a distance between the first gap 53 and the second gap 54 maintains the same along the first direction Z. In some other implementations, local welding treatment or local bonding treatment may be further performed on two adjacent layers of the first structures 51 in the connecting member 236. For example, welding treatment may be performed on the plurality of layers of the second structures 52 in the connecting portion 2363 of the connecting member 236 to further improve the bending strength of the connecting portion 2363. It should be understood that, in the embodiments of this application, the number of layers of the connecting members 236 shown in FIG. 7 is merely an example.

It should be understood that the connecting portion 2363 and the bending portion 2364 in the embodiments of this application may be a split structure. In some implementations, the connecting portion 2363 and the bending portion 2364 in the embodiments of this application may be fixed by welding or bonding. Specifically, in the embodiments of this application, a connecting portion 2363 including at least one layer of the first structure 51 and a bending portion 2364 including at least one layer of the second structure 52 may be separately prepared according to actual needs, and then the bending portion 2364 and the connecting portion 2363 may be fixedly connected by welding or bonding. For example, the connecting portion 2363 and the bending portion 2364 may be fixed by ultrasonic welding, laser welding, or fusion welding. Therefore, in the embodiments of this application, connecting the connecting portion 2363 and the bending portion 2364 by welding or bonding. Such connection methods are simple and reliable, which helps reduce manufacturing costs of the battery 10.

FIG. 8 is a schematic cross-sectional view of a partial structure of a connecting member 236 in an embodiment of this application. As shown in FIG. 8, the connecting portion 2363 in the connecting member 236 may be an integrally formed single-layer structure, that is, the connecting portion 2363 includes one layer of the first structure 51, and the bending portion 2364 of the connecting member 236 is six layers of the second structures 52 stacked along the first direction Z. When the connecting member 236 is prepared, fusion welding treatment may be performed on the six layers of the second structures 52 close to one or two ends of the connecting portion 2363 along the second direction X, forming a fused structure at the one or two ends of the plurality of layers of the second structures 52 along the second direction X, and fusion welding treatment may be performed on the connecting portion 2363 and the bending portion 2364 to form a welded portion 55 at a connection between the connecting portion 2363 and the bending portion 2364, thereby implementing a fixed connection between the connecting portion 2363 and the bending portion 2364. It should be understood that, in the embodiments of this application, the number of layers of the second structures 52 shown in FIG. 8 is merely an example.

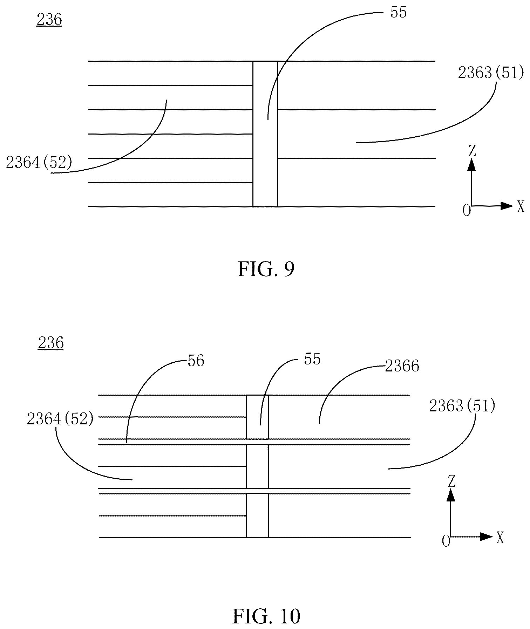

In some implementations, as shown in FIG. 9, FIG. 9 is a schematic cross-sectional view of a partial structure of another connecting member 236 in an embodiment of this application. The connecting portion 2363 in the connecting member 236 may include three layers of the first structures 51, and the bending portion 2364 may include six layers of the second structures 52. When the connecting member 236 is prepared, fusion welding treatment may be performed on the three layers of the first structures 51 at one or two ends of the connecting portion 2363 along the second direction X, forming a fused structure at the one or two ends of the connecting portion 2363 close to the bending portion 2364. Similarly, fusion welding treatment may be performed on the six layers of the second structures 52 at the one or two ends of the bending portion 2364 along the second direction X, forming a fused structure at the one or two ends of the bending portion 2364 close to the connecting portion 2363. Then, fusion welding treatment may be performed on the connecting portion 2363 and the bending portion 2364 to form a welded portion 55 at a connection between the connecting portion 2363 and the bending portion 2364, thereby implementing a fixed connection between the connecting portion 2363 and the bending portion 2364. It should be understood that, in the embodiments of this application, the number of layers of the first structures 51 and the number of layers of the second structures 52 shown in FIG. 9 are merely examples. It should also be understood that, in the embodiments of this application, as shown in FIG. 9, the first structure 51 in the connecting portion 2363 and the second structure 52 in the bending portion 2364 may be aligned or staggered.

In some implementations, as shown in FIG. 10, FIG. 10 is a schematic cross-sectional view of a partial structure of another connecting member 236 in an embodiment of this application. The connecting member 236 may be formed by stacking three third structures 2366, having a third gap 56 between two adjacent third structures 2366. Specifically, when the third structure 2366 is prepared, fusion welding treatment may be performed on two layers of the second structures 52 close to the one or two ends of the connecting portion 2363 along the second direction X, forming a fused structure on the two layers of the second structures 52 close to one or two ends of the connecting portion 2363. Then, fusion welding treatment may be performed on the two layers of the second structures 52 formed after fusion welding treatment and one layer of the first structure 51 of the connecting portion 2363 to form a welded portion 55 at the connection between the two layers of the second structures 52 and the one layer of the first structure 51, thereby obtaining the third structure 2366. Therefore, the connecting portion 2363 in the obtained connecting member 236 has three layers of the first structures 51, and the bending portion 2364 has six layers of the second structures 52. It should be understood that, in the embodiments of this application, the number of layers of the first structures 51 and the number of layers of the second structures 52 shown in FIG. 10 are merely examples.

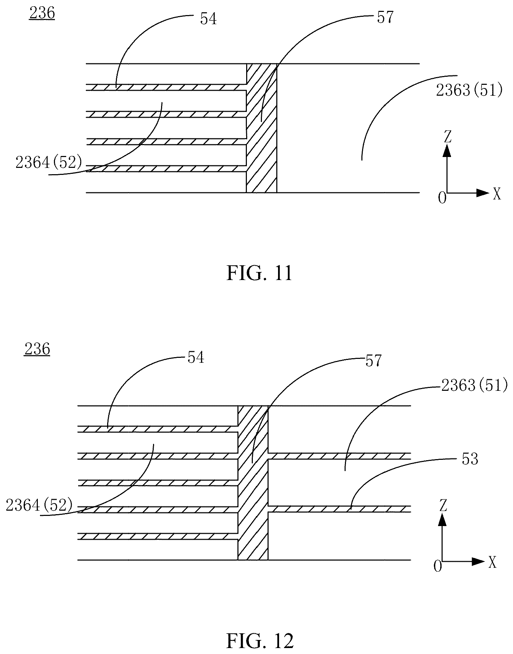

In some implementations, as shown in FIG. 11, FIG. 11 is a schematic cross-sectional view of a partial structure of another connecting member 236 in an embodiment of this application. The connecting portion 2363 in the connecting member 236 may be an integrally formed single-layer structure, that is, the connecting portion 2363 includes one layer of the first structure 51, and the bending portion 2364 of the connecting member 236 is five layers of the second structures 52 stacked along the first direction Z. When the connecting member 236 is prepared, bonding treatment may be performed between two adjacent second structures 52 of the bending portion 2364, that is, the second gap 54 between the adjacent second structures 52 is filled with an adhesive, making the plurality of layers of the second structures 52 form an integrated structure. Then, bonding treatment may be further performed on the connecting portion 2363 and the bending portion 2364 to form a bonded portion 57 at a connection between the connecting portion 2363 and the bending portion 2364, thereby improving a fixed connection between the connecting portion 2363 and the bending portion 2364. It should be understood that, in the embodiments of this application, the number of layers of the second structures 52 shown in FIG. 11 is merely an example.

In some implementations, as shown in FIG. 12, FIG. 12 is a schematic cross-sectional view of a partial structure of another connecting member 236 in an embodiment of this application. The connecting portion 2363 in the connecting member 236 may include three layers of the first structures 51, and the bending portion 2364 may include six layers of the second structures 52. When the connecting member 236 is prepared, bonding treatment may be performed between two adjacent layers of the first structures 51 in the connecting portion 2363, that is, the first gap 53 between the adjacent first structures 51 is filled with an adhesive, making the plurality of layers of the first structures 51 form an integrated structure. Similarly, bonding treatment may be performed between two adjacent layers of the second structures 52 in the bending portion 2364, that is, the second gap 54 between the adjacent second structures 52 is filled with an adhesive, making the plurality of layers of the second structures 52 form an integrated structure. Then, bonding treatment may be performed on the connecting portion 2363 and the bending portion 2364 to form a bonded portion 57 at a connection between the connecting portion 2363 and the bending portion 2364, thereby improving a fixed connection between the connecting portion 2363 and the bending portion 2364. It should be understood that, in the embodiments of this application, the number of layers of the second structures 52 shown in FIG. 12 is merely an example. It should also be understood that, in the embodiments of this application, as shown in FIG. 12, the first structure 51 in the connecting portion 2363 and the second structure 52 in the bending portion 2364 may be aligned or staggered.

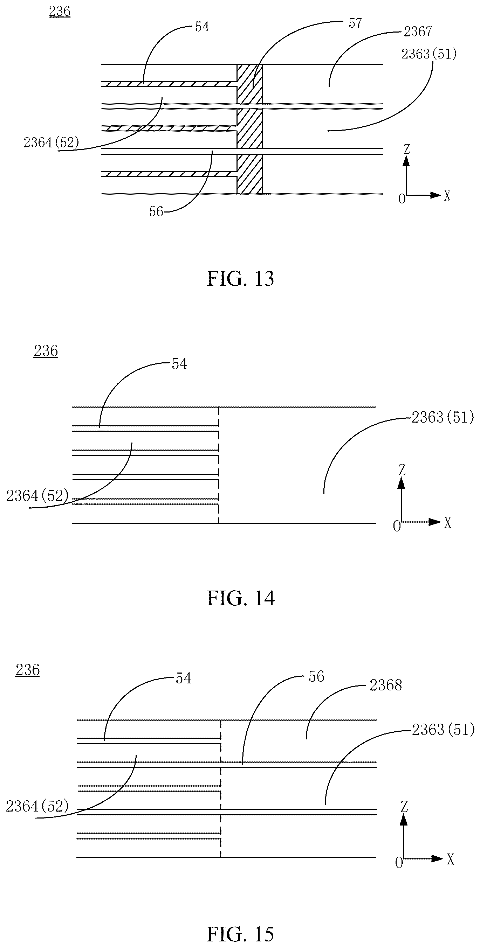

In some implementations, as shown in FIG. 13, FIG. 13 is a schematic cross-sectional view of a partial structure of another connecting member 236 in an embodiment of this application. The connecting member 236 may be formed by stacking three fourth structures 2367, having the third gap 56 between the adjacent fourth structures 2367. Specifically, when the fourth structure 2367 is prepared, bonding treatment may be performed on two layers of the second structures 52 in the bending portion 2364, that is, the second gap 54 between the adjacent second structures 52 is filled with an adhesive, making the two layers of the second structures 52 form an integrated structure. Then, bonding treatment may be performed between the two layers of the second structures 52 and one layer of the first structure 51 in the connecting portion 2363 to form the bonded portion 57 at a connection between the second structure 52 and the one layer of the first structure 51, thereby obtaining the fourth structure 2367. Therefore, the connecting portion 2363 in the obtained connecting member 236 has three layers of the first structures 51, and the bending portion 2364 has six layers of the second structures 52. It should be understood that, in the embodiments of this application, the number of layers of the first structures 51 and the number of layers of the second structures 52 shown in FIG. 13 are merely examples.

In some implementations, as shown in FIG. 14, FIG. 14 is a schematic cross-sectional view of a partial structure of another connecting member 236 in an embodiment of this application. When the connecting member 236 shown in FIG. 14 is prepared, an integrated structure having a single-layer structure may first be obtained. The dashed line in FIG. 14 represents a boundary between the connecting portion 2363 and the bending portion 2364 of the connecting member 236. The first structure 51 and the second structure 52 in the connecting member 236 are an integrated structure, and both the connecting portion 2363 and the bending portion 2364 of the connecting member 236 are single-layer structures. Then, layering treatment may be performed on the single-layer second structure 52 to obtain a bending portion 2364 having five layers of the second structures 52, having the second gap 54 between two adjacent second structures 52. It should be understood that, in the embodiments of this application, the number of layers of the second structures 52 shown in FIG. 14 is merely an example.

In some implementations, as shown in FIG. 15, FIG. 15 is a schematic cross-sectional view of a partial structure of another connecting member 236 in an embodiment of this application. When the connecting member 236 shown in FIG. 15 is prepared, a connecting member 236 having three layers of fifth structures 2368 may first be formed by stacking, having a third gap 56 between the adjacent fifth structures 2368. The dashed line in each fifth structure 2368 represents a boundary between the first structure 51 of the connecting portion 2363 and the second structure 52 of the bending portion 2364. Then, layering treatment may be performed on the second structure 52 in each fifth structure 2368 to obtain a fifth structure 2368 having two layers of the second structures 52, having the second gap 54 between the adjacent second structures 52. Therefore, the connecting portion 2363 in the obtained connecting member 236 has three layers of the first structures 51, and the bending portion 2364 has six layers of the second structures 52. It should be understood that, in the embodiments of this application, the number of layers of the first structures 51 and the number of layers of the second structures 52 shown in FIG. 15 are merely examples.

It should be understood that, in some implementations, a length of the bending portion 2364 along the first direction Z in the embodiments of this application may range from 0.1 mm to 5 mm. For example, the length of the bending portion 2364 along the first direction Z in the embodiments of this application may be 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, or within a range obtained by combining any two of the above values. In some other implementations, the length of the bending portion 2364 along the first direction Z in the embodiments of this application may alternatively range from 0.5 mm to 3 mm.

It should be understood that, in some implementations, a length of the connecting portion 2363 along the first direction Z in the embodiments of this application may range from 0.1 mm to 5 mm. For example, the length of the connecting portion 2363 along the first direction Z in the embodiments of this application may be 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, or within a range obtained by combining any two of the above values. In some other implementations, the length of the connecting portion 2363 along the first direction Z in the embodiments of this application may alternatively range from 0.5 mm to 3 mm.

In some implementations, the length of the connecting portion 2363 along the first direction Z in the embodiments of this application may be greater than, equal to, or less than the length of the bending portion 2364 along the first direction Z, and as an example, the embodiments of this application are not limited thereto.

It should be understood that, in some implementations, the length of the bending portion 2364 along the second direction X in the embodiments of this application may range from 1 mm to 10 mm. For example, the length of the bending portion 2364 along the second direction X in the embodiments of this application may be 1 mm, 2 mm, 3 mm, 4 mm, 5 mm, 6 mm, 7 mm, 8 mm, 9 mm, 10 mm, or within a range obtained by combining any two of the above values. In some other implementations, the length of the bending portion 2364 along the second direction X in the embodiments of this application may alternatively range from 3 mm to 7 mm.

It should be understood that, in some implementations, the length of the connecting portion 2363 along the second direction X in the embodiments of this application may range from 2 mm to 50 mm. For example, the length of the connecting portion 2363 along the second direction X in the embodiments of this application may be 2 mm, 3 mm, 4 mm, 5 mm, 6 mm, 7 mm, 8 mm, 9 mm, 10 mm, 20 mm, 30 mm, 40 mm, 50 mm, or within a range obtained by combining any two of the above values. In some other implementations, the length of the connecting portion 2363 along the second direction X in the embodiments of this application may alternatively range from 5 mm to 20 mm.

It should also be understood that, in some implementations, the length of the connecting portion 2363 and/or the bending portion 2364 along the third direction Y in the embodiments of this application may range from 1 mm to 50 mm. For example, the length of the connecting portion 2363 and/or the bending portion 2364 along the third direction Y in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, or within a range obtained by combining any two of the above values. In some other implementations, the length of the connecting portion 2363 and/or the bending portion 2364 along the third direction Y in the embodiments of this application may alternatively range from 5 mm to 20 mm.

In some implementations, the length of the connecting portion 2363 along the third direction Y may be greater than, equal to, or less than the length of the bending portion 2364 along the third direction Y, and as an example, the embodiments of this application are not limited thereto.

It should also be understood that, in some implementations, the number of layers of the first structures 51 and/or the number of layers of the second structures 52 in the embodiments of this application may range from 1 to 100. For example, the number of layers of the first structures 51 and/or the number of layers of the second structures 52 in the embodiments of this application may be 1, 2, 3, 4, 5, 6, 7, 8, 9, 10, 20, 30, 40, 50, 60, 70, 80, 90, 100, or within a range obtained by combining any two of the above values. In some other implementations, the number of layers of the first structures 51 and/or the number of layers of the second structures 52 in the embodiments of this application may alternatively range from 5 to 50.

In some implementations, as shown in FIG. 5 or FIG. 6, the connecting portion 2363 includes at least one layer of a first structure 51 stacked along the first direction Z, and the first structure 51 includes a reinforcing structure 60. Therefore, in the embodiments of this application, the connecting portion 2363 includes a plurality of layers of the first structures 51 stacked along the first direction Z, and the reinforcing structure 60 is provided on the plurality of layers of the first structures 51, so that the bending strength of the connecting portion 2363 can be improved, thereby reducing the deflection of the bending axis 2365 of the bending portion 2364 in the bending process, allowing the connecting member 236 to be smoothly installed into the housing 210 of the battery cell 20, enhancing structural stability of the connecting member 236, and improving service life of the battery 10.

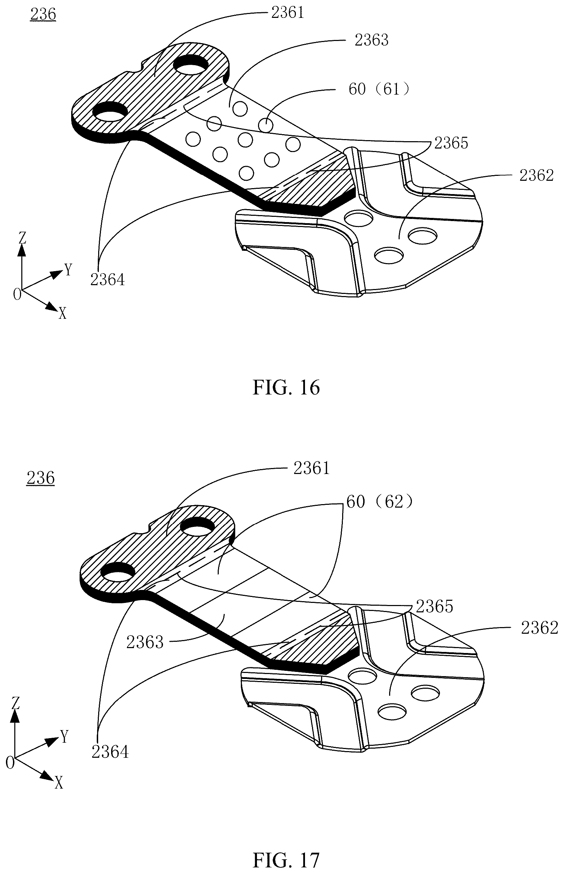

FIG. 16 is a schematic structural diagram of another connecting member 236 provided in an embodiment of this application.

In some implementations, as shown in FIG. 16, a surface of the first structure 51 perpendicular to the first direction Z is provided with a protruding structure 61, and the reinforcing structure 60 includes the protruding structure 61.

It should be understood that, in the embodiments of this application, the protruding structure 61 may be obtained by performing an embossing process on the plurality of layers of the first structures 51. An embossed shape of the protruding structure 61 perpendicular to the first direction Z is formed after the embossing process is performed, and may be circular, square, diamond, polygonal, or the like. Specifically, the embossing shape may be set according to actual needs, and as an example, the embodiments of this application are not limited thereto. It should also be understood that the number of protruding structures 61 may be one or more, and as an example, the embodiments of this application are not limited thereto.

In some implementations, a length of the protruding structure 61 along the first direction Z may range from 0.01 mm to 1 mm. For example, the length of the protruding structure 61 along the first direction Z in the embodiments of this application may be 0.01 mm, 0.02 mm, 0.03 mm, 0.04 mm, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, or within a range obtained by combining any two of the above values. In some other implementations, the length of the protruding structure 61 along the first direction Z may alternatively range from 0.05 mm to 0.5 mm.

In some implementations, the length of the protruding structure 61 along the second direction X may range from 1 mm to 70 mm. For example, the length of the protruding structure 61 along the second direction X in the embodiments of this application may be 1 mm, 2 mm, 3 mm, 4 mm, 5 mm, 6 mm, 7 mm, 8 mm, 9 mm, 10 mm, 15 mm, 20 mm, 25 mm, 30 mm, 35 mm, 40 mm, 45 mm, 50 mm, 55 mm, 60 mm, 65 mm, 70 mm, or within a range obtained by combining any two of the above values. In some other implementations, the length of the protruding structure 61 along the second direction X may alternatively range from 5 mm to 50 mm.

In some implementations, the length of the protruding structure 61 along the third direction Y may range from 1 mm to 50 mm. For example, the length of the protruding structure 61 along the third direction Y in the embodiments of this application may be set to 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 20 mm, 25 mm, 30 mm, 35 mm, 40 mm, 45 mm, 50 mm, or within a range obtained by combining any two of the above values. In some other implementations, the length of the protruding structure 61 along the third direction Y may alternatively range from 5 mm to 20 mm.

Therefore, in the embodiments of this application, the surface of the first structure 51 perpendicular to the first direction Z is provided with the protruding structure 61, for example, the protruding structure 61 may be formed by local pressing, reducing the distance between the adjacent first structures 51 along the first direction Z and enabling close contact between the plurality of layers of the first structures 51, so that the bending strength of the connecting portion 2363 can be improved. Additionally, the protruding structure 61 formed by the local pressing process protrudes from the surface of the first structure 51 perpendicular to the first direction Z, making it difficult for the connecting portion 2363 to bend at the protruding structure 61, so that the deflection of the bending axis 2365 of the bending portion 2364 in the bending process can be reduced, thereby allowing the connecting member 236 to be smoothly installed into the housing 210 of the battery cell 20, enhancing the structural stability of the connecting member 236, and improving the service life of the battery 10.

It should also be understood that, in the embodiments of this application, the number of layers of the first structures 51 provided with the protruding structure 61 may range from 2 to 100. For example, the number of layers of the first structures 51 provided with the protruding structure 61 in the embodiments of this application may be 2, 3, 4, 5, 6, 7, 8, 9, 10, 20, 30, 40, 50, 60, 70, 80, 90, 100, or within a range obtained by combining any two of the above values. In some implementations, the number of layers of the first structures 51 provided with the protruding structure 61 may alternatively range from 5 to 50.

In some implementations, the connecting portion 2363 includes a plurality of layers of the first structures 51, and the protruding structures 61 of the plurality of layers of the first structures 51 protrude in the same direction. It should be understood that, in the embodiments of this application, the protruding structures 61 of the plurality of layers of the first structures 51 protruding in the same direction may mean protruding toward one end along the first direction Z. Therefore, in the embodiments of this application, the protruding structures 61 of the plurality of layers of the first structures 51 protrude in the same direction, for example, the plurality of layers of the first structure 51 are pressed in the same direction by a pressing process, so that the bending strength of the connecting portion 2363 can be further improved and the deflection of the bending axis 2365 of the bending portion 2364 can be reduced in the bending process, thereby allowing the connecting member 236 to be smoothly installed into the housing 210 of the battery cell 20, improving the structural stability of the connecting member 236, and improving the service life of the battery 10.

In some implementations, positions of the protruding structures 61 of the plurality of layers of the first structures 51 overlap with each other. Therefore, in the embodiments of this application, the positions of the protruding structures 61 of the plurality of layers of the first structures 51 overlap with each other, for example, a same region of the plurality of continuously arranged layers of the first structures 51 is pressed in the same direction by a pressing process, so that a distance between the plurality of layers of the first structures 51 along the first direction Z is reduced, thereby improving the bending strength of at least a partial region of the connecting portion 2363, improving the bending strength of the plurality of layers of the first structures 51, reducing the deflection of the bending axis 2365 of the bending portion 2364 in the bending process. Therefore, the connecting member 236 is allowed to be smoothly installed into the housing 210 of the battery cell 20, so that the structural stability of the connecting member 236 can be enhanced, thereby improving the service life of the battery 10.

In some implementations, at least two adjacent layers of the first structures 51 in the plurality of layers of the first structures 51 are connected to each other, and the reinforcing structure 60 includes the at least two layers of the first structures 51 connected to each other. It should be understood that connection methods for connecting the at least two adjacent layers of the first structures 51 in the plurality of layers of the first structures 51 in the embodiments of this application include, but are not limited to, ultrasonic welding, laser welding, or bonding. Specifically, when the connection method for connecting the two adjacent layers of the first structures 51 in the plurality of layers of the first structures 51 is welding or bonding, the connection region in the embodiments of this application means a welding region or bonding region between the two adjacent layers of the first structures 51 in the at least two layers of the first structures 51. It should be understood that the connection region means at least a partial surface of one or two sides of the first structure 51 perpendicular to the first direction Z.

It should be understood that, in the embodiments of this application, a length of the connection region along the second direction X may range from 1 mm to 70 mm. For example, the length of the connection region along the second direction X in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, or within a range obtained by combining any two of the above values. In some implementations, the length of the connection region along the second direction X may alternatively range from 5 mm to 50 mm.

It should also be understood that, in the embodiments of this application, the length of the connection region along the third direction Y may range from 1 mm to 50 mm. For example, the length of the connection region along the third direction Y in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, or within a range obtained by combining any two of the above values. In some implementations, the length of the connection region along the third direction Y may alternatively range from 5 mm to 20 mm.

Therefore, in the embodiments of this application, the at least two adjacent layers of the first structures 51 in the plurality of layers of the first structures 51 are connected to each other, so that the plurality of layers of the first structures 51 are closely connected, thereby improving the bending strength of the connecting portion 2363 and reducing the deflection of the bending axis 2365 of the bending portion 2364 in the bending process.

In some implementations, in the embodiments of this application, when the bending portion 2364 includes a plurality of layers of the second structures 52, at least two adjacent layers of the second structures 52 in the plurality of layers of the second structures 51 of the bending portion 2364 may also be connected to each other. When the bending strength of the connecting portion 2363 is greater than the bending strength of the bending portion 2364, the bending strength of the bending portion 2364 can be appropriately improved, helping reduce excessive deformation of the bending portion 2364 in the bending process and improve fatigue resistance strength of the bending portion 2364.

FIG. 17 is a schematic structural diagram of another connecting member 236 provided in an embodiment of this application.

In some implementations, the connecting portion 2363 includes at least one layer of the first structure 51 stacked along the first direction Z, and at least one side of the first structure 51 perpendicular to the first direction Z is provided with the reinforcing structure 60. For example, the reinforcing structure may include the first reinforcing structure 62, and the first reinforcing structure 62 may be disposed on one or two sides of the at least one layer of the first structure 51 perpendicular to the first direction Z. For example, as shown in FIG. 17, two ends of the connecting portion 2363 along the second direction X close to the bending portion 2364 may be provided with the first reinforcing structure 62. Specifically, the number of the first reinforcing structures 62 may be set according to actual needs.

It should be understood that, in the embodiments of this application, the length of the first reinforcing structure 62 along the first direction Z may range from 0.01 mm to 5 mm. For example, the length of the first reinforcing structure 62 along the first direction Z in the embodiments of this application may be 0.01 mm, 0.02 mm, 0.03 mm, 0.04 mm, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, or within a range obtained by combining any two of the above values. In some implementations, the length of the first reinforcing structure 62 along the first direction Z may alternatively range from 0.05 mm to 3 mm.

It should also be understood that, in the embodiments of this application, the length of the first reinforcing structure 62 along the second direction X may range from 1 mm to 70 mm. For example, the length of the first reinforcing structure 62 along the second direction X in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, or within a range obtained by combining any two of the above values. In some implementations, the length of the first reinforcing structure 62 along the second direction X may alternatively range from 5 mm to 50 mm.

It should also be understood that, in the embodiments of this application, the length of the first reinforcing structure 62 along the third direction Y may range from 1 mm to 60 mm. For example, the length of the first reinforcing structure 62 along the third direction Y in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, or within a range obtained by combining any two of the above values. In some implementations, the length of the first reinforcing structure 62 along the third direction Y may alternatively range from 5 mm to 30 mm.

Therefore, the reinforcing structure 60 is provided on at least one side of the first structure 51 perpendicular to the first direction Z, so that the bending strength of the first structure 51 can be effectively improved, thereby improving the bending strength of the connecting portion 2363 and reducing the deflection of the bending axis 2365 of the bending portion 2364 in the bending process.

In some implementations, two sides of the first structure 51 perpendicular to the first direction Z are each provided with the reinforcing structure 60, which can further improve the bending strength of the first structure 51, thereby improving the bending strength of the connecting portion 2363 and reducing the deflection of the bending axis 2365 of the bending portion 2364 in the bending process.

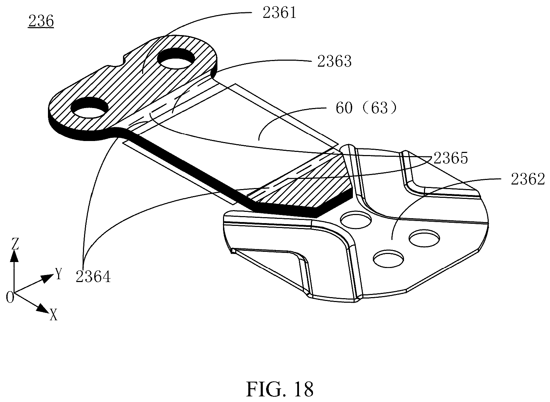

FIG. 18 is a schematic structural diagram of another connecting member 236 provided in an embodiment of this application.

In some implementations, two sides of the first structure 51 perpendicular to the first direction Z are provided with the same reinforcing structure 60, and the same reinforcing structure 60 wraps around the first structure 51. For example, as shown in FIG. 18, the reinforcing structure 60 configured to wrap around the first structure 51 may be a second reinforcing structure 63.

In some implementations, the second reinforcing structure 63 may be a thin film structure.

It should be understood that, in the embodiments of this application, a thickness of the thin film structure may range from 0.01 mm to 5 mm. For example, the thickness of the thin film structure in the embodiments of this application may be 0.01 mm, 0.02 mm, 0.03 mm, 0.04 mm, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, or within a range obtained by combining any two of the above values. In some implementations, the thickness of the thin film structure may alternatively range from 0.05 mm to 2 mm.

It should also be understood that the length of the thin film structure along the second direction X in the embodiments of this application may range from 1 mm to 100 mm. For example, the length of the thin film structure along the second direction X in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, 80 mm, 90 mm, 100 mm, or within a range obtained by combining any two of the above values. In some implementations, the length of the thin film structure along the second direction X in the embodiments of this application may alternatively range from 5 mm to 50 mm.

It should also be understood that, in the embodiments of this application, the length of the thin film structure along the third direction Y may range from 1 mm to 70 mm. For example, the length of the thin film structure along the third direction Y in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, or within a range obtained by combining any two of the above values. In some implementations, the length of the thin film structure in the embodiments of this application along the third direction Y may alternatively range from 5 mm to 30 mm.

In some implementations, the second reinforcing structure 63 may be a heat-shrinkable tube. Specifically, the heat-shrinkable tube may wrap around at least one first structure 51 of the connecting portion 2363, and then the heat-shrinkable tube is subjected to heat treatment to cause it to shrink, thereby effectively improving the bending strength of the at least one first structure 51 and improving the bending strength of the connecting portion 2363.

It should be understood that, in the embodiments of this application, a tube thickness of the heat-shrinkable tube may range from 0.01 mm to 5 mm. For example, the tube thickness of the heat-shrinkable tube in the embodiments of this application may be 0.01 mm, 0.02 mm, 0.03 mm, 0.04 mm, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, or within a range obtained by combining any two of the above values. In some implementations, the tube thickness of the heat-shrinkable tube may range from 0.05 mm to 2 mm.

It should also be understood that, in the embodiments of this application, a length of the heat-shrinkable tube along the second direction X may range from 1 mm to 150 mm. For example, the length of the heat-shrinkable tube along the second direction X in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, 80 mm, 90 mm, 100 mm, 110 mm, 120 mm, 130 mm, 140 mm, 150 mm, or within a range obtained by combining any two of the above values. In some implementations, the length of the heat-shrinkable tube along the second direction X may alternatively range from 5 mm to 100 mm.

It should also be understood that, in the embodiments of this application, the length of the heat-shrinkable tube along the third direction Y may range from 1 mm to 100 mm. For example, the length of the heat-shrinkable tube along the third direction Y in the embodiments of this application may be 1 mm, 2 mm, 3 mm, 4 mm, 5 mm, 6 mm, 7 mm, 8 mm, 9 mm, 10 mm, 20 mm, 30 mm, 40 mm, 50 mm, 60 mm, 70 mm, 80 mm, 90 mm, 100 mm, or within a range obtained by combining any two of the above values. In some implementations, the length of the heat-shrinkable tube along the third direction Y may alternatively range from 5 mm to 50 mm.

Therefore, in the embodiments of this application, the same reinforcing structure 60 is provided on two sides of the first structure 51 perpendicular to the first direction Z, and the same reinforcing structure 60 wraps around the first structure 51, so that the bending strength of the connecting portion 2363 can be significantly improved, thereby reducing the deflection of the bending axis 2365 of the bending portion 2364 in the bending process.

In some other embodiments, in the embodiments of this application, the two sides of the first structure 51 perpendicular to the first direction Z are each provided with reinforcing structures 60, and two sides of the first structure 51 perpendicular to the third direction Y are each provided with the reinforcing structures 60, so that the bending strength of the connecting portion 2363 can be significantly improved, thereby reducing the deflection of the bending axis 2365 of the bending portion 2364 in the bending process, allowing the connecting member 236 to be smoothly installed into the housing 210 of the battery cell 20, enhancing the structural stability of the connecting member 236, and improving the service life of the battery 10.

In some implementations, in the embodiments of this application, a material of the reinforcing structure 60 includes at least one of the following: polypropylene PP, polyethylene terephthalate PET, polyethylene PE, polyvinyl chloride PVC, polytetrafluoroethylene PTFE, ethylene-vinyl acetate copolymer EVA, and rubber.

In some implementations, the connecting portion 2363 includes at least one layer of the first structure 51 stacked along the first direction Z, the bending portion 2364 includes at least one layer of a second structure 52 stacked along the first direction Z, and the number of layers of the first structures 51 included in the connecting portion 2363 is equal to the number of layers of the second structures 52 included in the bending portion 2364, thereby helping manufacture the connecting member 236 and improve the processing efficiency of the battery 10.

In the embodiments of this application, the bending strength of the connecting portion 2363 and the bending portion 2364 can be tested using a three-point or four-point bending test. The following uses the three-point bending test as an example for explanation. Specifically, in the testing process, test samples are first prepared, that is, the sample to be tested is processed into five test samples with dimensions of 2 mm × 3 mm × 15 mm. A universal material testing machine is used to perform the three-point bending test on the test samples, with a span of 30 mm and a loading rate of 0.5 mm/min. Measurement values at three positions on each sample are measured, and an average of these three measurement values is calculated. Further, an average of the calculated averages for the five test samples is obtained to determine the bending strength of the test sample.

It should be understood that the bending strength of the connecting portion 2363 in the embodiments of this application can be set according to actual needs. In some implementations, the bending strength of the connecting portion 2363 in the embodiments of this application may range from 0.04 MPa to 1 MPa. If the bending strength of the connecting portion 2363 is less than 0.04 MPa, that is, the bending strength of the connecting portion 2363 is too low, the connecting portion 2363 may bend in the bending process of the connecting member 236, leading to deflection in the position of the bending axis 2365 of the bending portion 2364, making it difficult for the connecting member 236 to be smoothly installed into the housing 210 of the battery cell 20. If the bending strength of the connecting portion 2363 is greater than 1 MPa, that is, the bending strength of the connecting portion 2363 is too high, likely leading to higher material processing costs. Therefore, the bending strength of the connecting portion 2363 in the embodiments of this application ranges from 0.04 MPa to 1 MPa.

For example, the bending strength of the connecting portion 2363 may be 0.04 MPa, 0.05 MPa, 0.06 MPa, 0.07 MPa, 0.08 MPa, 0.09 MPa, 0.1 MPa, 0.2 MPa, 0.3 MPa, 0.4 MPa, 0.5 MPa, 0.6 MPa, 0.7 MPa, 0.8 MPa, 0.9 MPa, 1 MPa, or within a range obtained by combining any two of the above values.

It should also be understood that the bending strength of the bending portion 2364 in the embodiments of this application can be set according to actual needs. In some implementations, the bending strength of the bending portion 2364 in the embodiments of this application may range from 0.02 MPa to 0.45 MPa. If the bending strength of the bending portion 2364 is less than 0.02 MPa, that is, the bending strength of the bending portion 2364 is too low, likely leading to deflection in the position of the bending axis 2365 of the bending portion 2364 in the bending process of the connecting member 236, making it difficult for the connecting member 236 to be smoothly installed into the housing 210 of the battery cell 20. If the bending strength of the bending portion 2364 is greater than 0.45 MPa, that is, the bending strength of the bending portion 2364 is too high, so that it is difficult to bend the bending portion 2364, thereby affecting use of the connecting member 236. Therefore, the bending strength of the bending portion 2364 in the embodiments of this application ranges from 0.02 MPa to 0.45 MPa.

For example, the bending strength of the bending portion 2364 may be 0.02 MPa, 0.03 MPa, 0.04 MPa, 0.05 MPa, 0.06 MPa, 0.07 MPa, 0.08 MPa, 0.09 MPa, 0.1 MPa, 0.15 MPa, 0.2 MPa, 0.25 MPa, 0.3 MPa, 0.35 MPa, 0.4 MPa, 0.45 MPa, or within a range obtained by combining any two of the above values.

In some implementations, as shown in FIG. 5 to FIG. 11, the connecting member 236 further includes an electrode terminal connection end 2361 and a tab connection end 2362, and the tab connection end 2362 is connected to the connecting portion 2363 and the electrode terminal connection end 2361 is connected to the connecting portion 2363 respectively through the bending portion 2364.

In some implementations, the tab connection end 2362 and the electrode terminal connection end 2361 are disposed at the two ends of the connecting portion 2363 along the second direction X. In this way, in the embodiments of this application, the tab connection end 2362 and the electrode terminal connection end 2361 are disposed at the two ends of the connecting portion 2363 along the second direction X, so that a certain distance is maintained between the tab connection end 2362 and the electrode terminal connection end 2361, thereby reducing mutual interference between the electrode terminal 237 and the electrode assembly 220.

In some implementations, a bending direction of the bending portion 2364 between the tab connection end 2362 and the connecting portion 2363 is opposite to a bending direction of the bending portion 2364 between the electrode terminal connection end 2361 and the connecting portion 2363. For example, when the bending direction of the bending portion 2364 between the tab connection end 2362 and the connecting portion 2363 is set to clockwise, the bending direction of the bending portion 2364 between the electrode terminal connection end 2361 and the connecting portion 2363 is set to counterclockwise. When the bending direction of the bending portion 2364 between the tab connection end 2362 and the connecting portion 2363 is set to counterclockwise, the bending direction of the bending portion 2364 between the electrode terminal connection end 2361 and the connecting portion 2363 is set to clockwise.

Therefore, in the embodiments of this application, the bending direction of the bending portion 2364 between the tab connection end 2362 and the connecting portion 2363 is set opposite the bending direction of the bending portion 2364 between the electrode terminal connection end 2361 and the connecting portion 2363, so that a space occupied by the bent connecting member 236 in the battery is reduced, thereby saving space inside the battery 10.

In some implementations, when the connecting member 236 is a negative electrode connecting member, a material of the connecting member 236 may be copper. When the connecting member 236 is a positive electrode connecting member, the material of the connecting member 236 may be aluminum.

In some implementations, refer to FIG. 16, an embodiment of this application provides a connecting member 236. In the connecting member 236, the number of layers of the first structures 51 in the connecting portion 2363 and the number of layers of the second structures 52 in the bending portion 2364 are both four. A length of each layer of the first structure 51 and a length of each layer of the second structure 52 along the first direction Z are both 0.15 mm. A length of the first structure 51 and a length of the second structure 52 along the third direction Y are both 8 mm, and a length of the connecting member 236 along the second direction X is 18 mm. An embossing process is performed on an outer surface of the first structure 51 at the two ends of the connecting portion 2363 along the first direction Z, and the outer surface of the first structure 51 can be understood as a surface of the first structure 51 away from a center of the connecting portion 2363. A length of the embossed region along the second direction X is 6 mm, and a length of the embossed region along the third direction Y is 8 mm. For example, the connecting member 236 may be applied to a battery cell 20 with a diameter of 32 mm and a length of 150 mm.

In some implementations, refer to FIG. 17, an embodiment of this application provides another connecting member 236. In the connecting member 236, the number of layers of the first structures 51 in the connecting portion 2363 and the number of layers of the second structures 52 in the bending portion 2364 are both six, and the length of each layer of the first structure 51 and the length of each layer of the second structure 52 along the first direction Z are both 0.1 mm. The length of the connecting member 236 along the third direction Y is 18 mm. Along the bending direction of the bending portion 2364, from the second structure 52 near the bending axis 2365 of the bending portion 2364 to the second structure 52 away from the bending axis 2365, the lengths of the second structures 52 along the second direction X are sequentially 26 mm, 28 mm, 29 mm, 30 mm, 31 mm, and 32 mm. Welding treatment may be performed on the first structure 51 of the connecting portion 2363, and a length of a welded region along the second direction X is 10 mm, and a length of the welded region along the third direction Y is 18 mm. For example, the connecting member 236 may be applied to a battery cell 20 with a diameter of 46 mm and a length of 180 mm.

In some implementations, refer to FIG. 17, an embodiment of this application provides another connecting member 236. In the connecting member 236, the number of layers of the first structures 51 in the connecting portion 2363 and the number of layers of the second structures 52 in the bending portion 2364 are both five, and the length of each layer of the first structure 51 and the length of each layer of the second structure 52 along the first direction Z are 0.1 mm. The length of the first structures 51 and the length of the second structures 52 along the third direction Y are both 10 mm, and the length of all the connecting members 236 along the second direction X is 20 mm. A patch structure is provided on the outer surface of the first structure 51 at each of the two ends of the connecting portion 2363 along the first direction Z, and the outer surface of the first structure 51 can be understood as the surface of the first structure 51 away from the center of the connecting portion 2363. A length of the patch structure along the second direction X is 8 mm, and a length of the patch structure along the third direction Y is 12 mm. Along the third direction Y, the patch structure extending beyond the connecting member 236 may be subjected to a melting process to attach it to the connecting member 236. For example, the connecting member 236 may be applied to a battery cell 20 with a diameter of 34 mm and a length of 200 mm.

In some implementations, refer to FIG. 18, an embodiment of this application provides another connecting member 236. In the connecting member 236, the number of layers of the first structures 51 in the connecting portion 2363 and the number of layers of the second structures 52 in the bending portion 2364 are both eight, and the length of each layer of the first structure 51 and the length of each layer of the second structure 52 along the first direction Z are both 0.15 mm. The length of the first structure 51 and the length of the second structure 52 along the third direction Y are both 30 mm, and the length of the connecting member 236 along the second direction X is 46 mm. A patch structure is provided on the outer surface of the first structure 51 at each of the two ends of the connecting portion 2363 along the first direction Z, and the outer surface of the first structure 51 can be understood as the surface of the first structure 51 away from the center of the connecting portion 2363. The length of the patch structure along the second direction X is 36 mm, and the length of the patch structure along the third direction Y is 28 mm. Subsequently, an annular film wrapping process is performed on the connecting portion 2363 and the bending portion 2364 of the connecting member 236, and a thickness of the wrapping film formed after wrapping is 0.06 mm, the length of the wrapping film along the second direction X is 60 mm, and the length of the wrapping film along the third direction Y is 32 mm. For example, the connecting member 236 may be applied to a battery cell 20 with a diameter of 50 mm and a length of 190 mm.

In some implementations, refer to FIG. 18, an embodiment of this application provides another connecting member 236. In the connecting member 236, the number of layers of the first structures 51 in the connecting portion 2363 and the number of layers of the second structures 52 in the bending portion 2364 are both seven, and the length of each layer of the first structure 51 and the length of each layer of the second structure 52 along the first direction Z are both 0.1 mm. The length of the first structure 51 and the length of the second structure 52 along the third direction Y are 8 mm, and the length of the connecting member 236 along the second direction X is 24 mm. A heat-shrinkable tube is nested around the connecting portion 2363 of the connecting member 236. A length of the heat-shrinkable tube along the second direction X is 15 mm, and a length of the heat-shrinkable tube along the third direction Y is 12 mm. Specifically, after the heat-shrinkable tube is nested around the connecting portion 2363, the heat-shrinkable tube is subjected to heat treatment to cause it to shrink, thereby improving the bending strength of the connecting portion 2363. For example, the connecting member 236 may be applied to a battery cell 20 with a diameter of 34 mm and a length of 184 mm.

It should be noted that, without conflict, the various embodiments described in this application and/or the technical features in the various embodiments can be combined in any manner, and the technical solutions obtained after combination should also fall within the protection scope of this application.

Although this application has been described with reference to the foregoing embodiments, various modifications can be made to this application without departing from the scope of this application and the components therein can be replaced with equivalents. In particular, various technical features mentioned in the embodiments can be combined in any manner provided that there is no structural conflict. This application is not limited to the specific embodiments disclosed in this specification, but includes all technical solutions falling within the scope of the claims.

## Claims

1. A connecting member for use in a battery cell, **characterized in that** the connecting member comprises:
a connecting portion; and
a bending portion, the connecting portion being connected to the bending portion;
wherein the connecting portion has a reinforcing structure, and the reinforcing structure is configured to make a bending strength of the connecting portion greater than a bending strength of the bending portion.

2. The connecting member according to claim 1, **characterized in that** the connecting portion comprises at least one layer of a first structure stacked along a first direction, and the first structure comprises the reinforcing structure.

3. The connecting member according to claim 2, **characterized in that** a surface of the first structure perpendicular to the first direction is provided with a protruding structure, and the reinforcing structure comprises the protruding structure.

4. The connecting member according to claim 3, **characterized in that** the connecting portion comprises a plurality of layers of the first structures, and protruding structures of the plurality of layers of the first structures protrude in a same direction.

5. The connecting member according to claim 4, **characterized in that** positions of the protruding structures of the plurality of layers of the first structures overlap with each other.

6. The connecting member according to any one of claims 2 to 5, **characterized in that** at least two adjacent layers of the first structures in the plurality of layers of the first structures are connected to each other, and the reinforcing structure comprises the at least two layers of the first structures connected to each other.

7. The connecting member according to any one of claims 1 to 6, **characterized in that** the connecting portion comprises at least one layer of the first structure stacked along the first direction, and at least one side of the first structure perpendicular to the first direction is provided with the reinforcing structure.

8. The connecting member according to claim 7, **characterized in that** two sides of the first structure perpendicular to the first direction are each provided with the reinforcing structure.

9. The connecting member according to claim 8, **characterized in that** the two sides of the first structure perpendicular to the first direction are provided with a same reinforcing structure, and the same reinforcing structure wraps around the first structure.

10. The connecting member according to any one of claims 7 to 9, **characterized in that** a material of the reinforcing structure comprises at least one of the following: polypropylene PP, polyethylene terephthalate PET, polyethylene PE, polyvinyl chloride PVC, polytetrafluoroethylene PTFE, ethylene-vinyl acetate copolymer EVA, and rubber.

11. The connecting member according to any one of claims 1 to 10, **characterized in that** the connecting portion comprises at least one layer of the first structure stacked along the first direction, the bending portion comprises at least one layer of a second structure stacked along the first direction, and a number of layers of the first structures comprised in the connecting portion is equal to a number of layers of the second structures comprised in the bending portion.

12. The connecting member according to any one of claims 1 to 11, **characterized in that** the connecting member further comprises a tab connection end and an electrode terminal connection end, and the tab connection end is connected to the connecting portion and the electrode terminal connection end is connected to the connecting portion respectively through the bending portion.

13. The connecting member according to claim 12, **characterized in that** the tab connection end and the electrode terminal connection end are disposed at two ends of the connecting portion in a second direction.

14. The connecting member according to claim 13, **characterized in that** a bending direction of the bending portion between the tab connection end and the connecting portion is opposite to a bending direction of the bending portion between the electrode terminal connection end and the connecting portion.

15. A battery cell, **characterized by** comprising the connecting member according to any one of claims 1 to 14.

16. A battery, **characterized by** comprising the battery cell according to claim 15.

17. An electric apparatus, **characterized by** comprising the battery according to claim 16.
